# EUROPÄISCHE PATENTANMELDUNG

(11) **EP 2 083 131 A2**
(43) Veröffentlichungstag der Anmeldung: **29.07.2009**
(21) Anmeldenummer: 08169382.2
(22) Anmeldetag: 18.11.2008
(51) Int. Cl.: E04C 2/36

(54) **Verfahren zur Herstellung einer Leichtbauplatte und Leichtbauplatte**

(30) Priorität: 25.01.2008 DE 102008006040
(71) Anmelder: Hettich-ONI GmbH & Co. KG, 32606 Vlotho (DE)
(72) Erfinder: Schael, Oliver, 32278 Kirchlengern (DE); Andschus, Stefan, 32312 Lübbecke (DE); Gorges, Alexander, 33790 Halle/Westf. (DE); Sobolewski, Uwe, 32257 Bünde (DE)
(74) Vertreter: Dantz, Jan Henning

(57) **Zusammenfassung**

Ein Verfahren zur Herstellung einer Leichtbauplatte (1) mit mindestens einem Befestigungselement (9) umfasst die folgenden Schritte:
a) Benetzen einer oberen und einer unteren Deckschicht (2, 3) mit einem unter Wärmeeinwirkung verflüssigbaren Klebstoff (5, 5');
b) Verkleben einer Zwischenlage (4) mit der oberen und der unteren Deckschicht (2, 3);
c) Einbringen einer Ausnehmung (6) in der oberen Deckschicht (2) und der Zwischenlage (4);
d) Einsetzen eines Befestigungselementes (9) in die Ausnehmung (6) wobei eine untere Kontaktfläche (10) des Befestigungselementes (9) an der mit Klebstoff (5, 5') beschichteten unteren Deckschicht (3) anliegt;
e) Erwärmen des Klebstoffes (5, 5') im Bereich der unteren Kontaktfläche (10) des Befestigungselementes (9) und
f) Verkleben des Befestigungselementes (9) mit der unteren Deckschicht (3).

## Beschreibung

Die vorliegende Erfindung betrifft ein Verfahren zur Herstellung einer Leichtbauplatte mit mindestens einem Befestigungselement sowie eine Leichtbauplatte mit den Merkmalen des Oberbegriffes des Anspruches 8.

Die DE 10 2005 060 528 offenbart ein Verfahren zum Befestigen eines Einsatzkörpers in einer Leichtbauplatte, wobei der Einsatzkörper in eine Ausnehmung eingefügt wird und dann mit einer Deckschicht verschmolzen wird. Hierfür besteht der Einsatzkörper aus thermoplastischem Kunststoff und wird dann zumindest teilweise plastifiziert. Ein Verkleben durch Erwärmen des Einsatzkörpers ist allerdings problematisch, weil die Kontaktfläche an der Deckschicht beim Einbringen der Ausnehmung meist verschmutzt ist. Wird der Einsatzkörper zu stark verflüssigt, kann es zu Verformungen kommen, die auch die mechanische Stabilität der Verbindung nachteilig beeinflussen.

Die WO 2006/097518 offenbart ein Verfahren zum Befestigen eines Beschlagelementes an einem Holzwerkstoffelement, wobei das Beschlagelement mit einem Klebstoff beschichtet wird. Anschließend wird das Beschlagelement dann mit dem Holzwerkstoffelement in Kontakt gebracht und durch Erhitzen des Klebstoffes und anschließendes Aushärten wird dann eine Verklebung zwischen Beschlagelement und Holzwerkstoffelement herbeigeführt. Nachteilig ist dabei, dass das Beschichten des Beschlagelementes vergleichsweise aufwendig ist. Gerade bei kleineren Beschlagsteilen, wie beispielsweise Dübeln, erhöht das zusätzliche Beschichten einer Kontaktfläche des Beschlagsteiles die Kosten erheblich. Zudem kann die Beschichtung bei der Handhabung der Beschlagteile leicht beschädigt werden.

Schließlich ist aus der WO 2006/106131 ein Verbindungseinsatz für Leichtbauplatten bekannt, bei dem ein Klebstoffzuführkanal ausgebildet ist. Der Einsatz flüssigen Klebstoffes zum Verkleben eines Verbindungseinsatzes ist möglich, aber ebenfalls vergleichsweise aufwendig in der Verfahrensgestaltung.

Es ist daher Aufgabe der vorliegenden Erfindung ein Verfahren zur Herstellung einer Leichtbauplatte und eine Leichtbauplatte zu schaffen, die eine effektive Festlegung eines Befestigungselementes ermöglichen.

Diese Aufgabe wird mit einem Verfahren mit den Merkmalen des Anspruches 1 sowie einer Leichtbauplatte mit den Merkmalen des Anspruches 8 gelöst.

Bei dem erfindungsgemäßen Verfahren wird zunächst eine obere und eine untere Deckschicht mit einem unter Wärmeinwirkung verflüssigbaren Klebstoff benetzt und dann mit einer Zwischenlage verklebt. Dabei kann der Klebstoff als Folie, Granulat oder in Pulverform auf beiden Deckschichten unter Wärmeeinwirkung aufgegeben werden, um dann mit der Zwischenlage zu einer Leichtbauplatte verklebt zu werden.

Anschließend wird eine Ausnehmung in der oberen Deckschicht und der Zwischenlage eingebracht und ein Befestigungselement in die Ausnehmung eingesetzt, wobei eine untere Kontaktfläche des Befestigungselementes an der mit Klebstoff beschichteten unteren Deckschicht anliegt. Danach wird der Klebstoff im Bereich der unteren Kontaktfläche des Befestigungselementes erneut erwärmt und das Befestigungselement mit der unteren Deckschicht verklebt. Dadurch kann der Klebstoff zum Befestigen der Deckschicht an der Zwischenlage gleichzeitig auch eingesetzt werden, um das mindestens eine Befestigungselement an der Kontaktfläche zu verkleben. Ein vorheriges Beschichten des Befestigungselementes ist nicht notwendig und auch das Einbringen von zusätzlichem Klebstoff durch Klebstoffkanäle kann entfallen. Es ist lediglich vorgesehen, den Klebstoff an der unteren und/oder oberen Deckschicht in einer ausreichenden Dicke aufzubringen. Dadurch lässt sich eine Leichtbauplatte mit ein oder mehreren Befestigungselementen besonders effektiv herstellen. Soweit in der Anmeldung der Begriff "obere und untere Deckschicht" verwendet wird, dient dies zur besseren Erläuterung der Erfindung, wobei selbstverständlich die Begriffe "oben" und "unten" keine räumliche Anordnung der Leichtbauplatte beschreiben sollen. Insbesondere kann das Befestigungselement wahlweise an der oberen oder der unteren Deckschicht mit der Kontaktfläche verklebt werden.

Gemäß einer bevorzugten Ausgestaltung wird die Leichtbauplatte vor dem Einbringen der Ausnehmung geschnitten. Denn das Verkleben der Deckschichten mit der Zwischenlage kann in einem Durchlaufverfahren erfolgen, wobei große Platten bzw. eine Bahn hergestellt wird, die dann für eine weitere Verarbeitung zunächst geschnitten wird. Dann kann das Einbringen der Ausnehmung an einer vorbestimmten Position einer geschnittenen Platte erfolgen.

Das Erwärmen des Klebstoffes im Bereich der unteren Kontaktfläche des Befestigungselementes erfolgt vorzugsweise durch ein elektromagnetisches Feld. Dadurch kann das Erhitzen des Klebstoffes positionsgenau erfolgen, um eine Wärmeeinwirkung im benachbarten Bereich weitgehend zu vermeiden. Zudem kann das Erwärmen durch ein elektromagnetisches Feld relativ schnell erfolgen, was die Taktzeit vermindert.

Gemäß einer weiteren Ausgestaltung der Erfindung wird das Befestigungselement an der Unterseite profiliert ausgebildet und nach dem Einsetzen in die Ausnehmung gedreht. Dadurch können die beim Herstellen der Ausnehmung entstehenden Verunreinigungen radial nach außen geschoben werden, so dass zumindest ein Teil der Kontaktfläche an der zunächst trockenen und ausgehärteten Klebstoffschicht anliegt. Dies verbessert das Klebeergebnis beim anschließenden Erhitzen und verflüssigen des Klebstoffes.

Der Klebstoff wird beim Benetzen der unteren oder der oberen Deckschicht vorzugsweise mit einer Dicke von mehr als 0,1 mm, insbesondere mehr als 0,2 mm aufgetragen. Dadurch ist der Klebstoff in ausreichender Dicke vorhanden, um sowohl die Zwischenlage als auch anschließend mindestens ein Befestigungselement zu verkleben.

Um das Befestigungselement in der Ausnehmung zu fixieren, kann zusätzlich ein ringförmiger Kontaktbereich zwischen der oberen Deckschicht und dem Befestigungselement ebenfalls erwärmt werden. Dadurch erwärmt sich der ringförmige Bereich mit dem dort angeordneten Klebemittel und kann ebenfalls ein Verkleben zwischen dem Befestigungselement und der oberen Deckschicht bewirken.

Für eine besonders effektive Herstellung der Leichtbauplatte werden in einem Arbeitsgang mehrere Befestigungselemente mit der unteren Deckschicht verklebt. Das Verkleben kann auch in einem Durchlaufverfahren erfolgen, in dem an den Ausnehmungen entsprechende Heizeinrichtungen aktiviert werden.

Bei der erfindungsgemäßen Leichtbauplatte ist das mindestens eine Befestigungselement mittels der Klebstoffschicht mit der unteren Deckschicht verklebt, mit der auch die Zwischenlage verklebt ist. Dadurch muss das Befestigungselement und/oder die Deckschicht nicht mit einer zusätzlichen Klebstoffschicht benetzt werden, was eine effektive Herstellung ermöglicht.

Vorzugsweise ist der Klebstoff durch ein elektromagnetisches Feld erwärmbar und verflüssigbar. Beispielsweise kann der Klebstoff elektrisch leitfähige Partikel, wie Metallteilchen, enthalten, die durch magnetische Induktion erwärmt werden können. Damit das Befestigungselement mit einer ausreichenden Festigkeit mit der Deckschicht verklebt werden kann, wird der Klebstoff vorzugsweise mit einer Schichtdicke von mehr als 0,1 mm aufgetragen.

Das Befestigungselement ist vorzugsweise als Kunststoffdübel ausgebildet, das in eine Leichtbauplatte für den Möbelbereich eingeklebt wird. Die Zwischenlage kann dabei als Wabenpappe mit einer Vielzahl von Hohlräumen ausgebildet sein, so dass auch große Volumen der Leichtbauplatte mit geringem Gewicht hergestellt werden können.

Die Erfindung wird nachfolgend anhand eines Ausführungsbeispieles mit Bezug auf die beigefügten Zeichnungen näher erläutert.

Es zeigen:
- Figur 1: eine perspektivische Explosionsdarstellung einer Leichtbauplatte vor der Herstellung;
- Figuren 2A und 2B: zwei Detailansichten einer Deckschicht;
- Figur 3: eine perspektivische Ansicht der Leichtbauplatte im verklebten Zustand;
- Figur 4: eine geschnittene Seitenansicht der Leichtbauplatte vor dem Einbringen eines Befestigungselementes;
- Figur 5: eine geschnittene Seitenansicht der Leichtbauplatte mit eingefügten Befestigungselement, und
- Figuren 6A und 6B: zwei Ansichten eines Befestigungselementes.

Eine Leichtbauplatte 1 umfasst eine obere Deckschicht 2 und eine untere Deckschicht 3, die beispielsweise als Holzwerkstoffplatten, Pappe oder Kunststoffplatten ausgebildet sein können. Zwischen der oberen Deckschicht 2 und der unteren Deckschicht 3 ist eine Zwischenlage 4 angeordnet, die beispielsweise eine Papierwabenkonstruktion mit zahlreichen Hohlräumen sein kann.

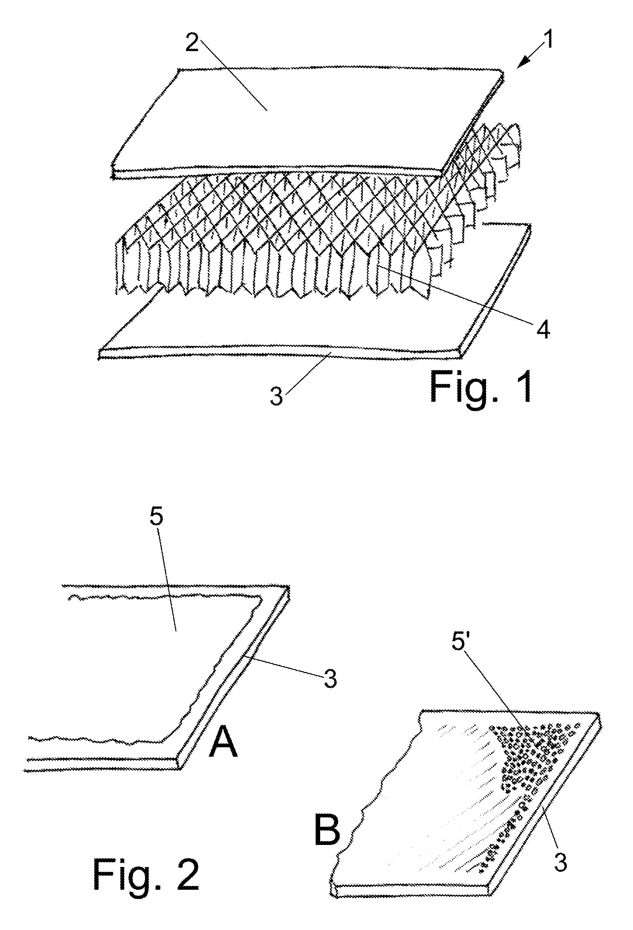

Um eine Leichtbauplatte 1 herzustellen, werden die obere Deckschicht 2 und die untere Deckschicht 3 an einer Seite mit einer Schicht 5 aus Klebstoff benetzt, zumindest in dem Bereich, in dem eine Verklebung mit der Zwischenlage 4 stattfinden soll (Figur 2A).

Es ist auch möglich, die Deckschicht 2 bzw. 3 nicht vollflächig zu benetzen, sondern tropfenförmig mit einer Schicht 5' zu benetzen (Figur 2B). Bei dem Klebstoff kann es sich um thermoplastischen Schmelzklebstoff handeln, der sich mehrmals erwärmen und aushärten lässt, ohne seine Klebekraft zu verlieren. Die Aufwärmung kann je nach Zusammensetzung des Klebstoffes über elektrische oder elektromagnetische Felder oder über Mikrowellenstrahlung erfolgen. Ein Auftragen des Klebstoffes 5 und 5' als Granulat, Pulverform ist ebenfalls denkbar.

Die Schicht 5 zw. 5' aus Klebstoff lässt sich im Durchlaufverfahren auf die Deckschichten 2 und 3 aufbringen, wobei dann eine Verklebung der Deckschichten 2 und 3 mit der Zwischenlage 4 erfolgt. Der Klebstoff härtet dann an den Deckschichten 2 und 3 aus und die so hergestellte Leichtbauplatte 1 kann dann zwischengelagert und geschnitten werden. Es ist auch möglich, nach dem Auftrag von Klebstoff 5 bzw. 5' auf die Deckschichten 2 und 3 zunächst den Klebstoff auszuhärten und dann zu einem späteren Zeitpunkt die Schicht 5 bzw. 5' aus Klebstoff zu erhitzen und mit der Zwischenlage 4 zu verkleben.

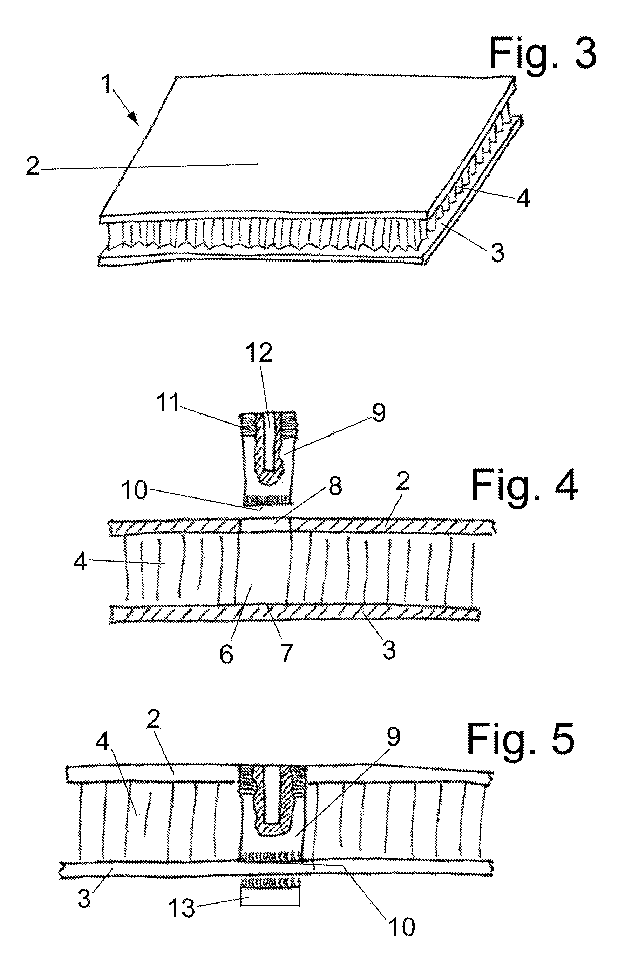

Eine so hergestellte Leichtbauplatte 1 ist in Figur 3 dargestellt. Diese kann nun auf die gewünschte Größe zurechtgeschnitten werden, wobei auch ein randseitiges Besäumen erfolgen kann. Um die Leichtbauplatte 1 mit weiteren Teilen zu verbinden, werden ein oder mehrere Befestigungselemente 9 festgelegt.

Hierfür wird entsprechend Figur 4 eine Ausnehmung 6 in der Leichtbauplatte 1 ausgespart, die durch die obere Deckschicht 2 und die Zwischenlage 4 bis zu einer Bodenfläche 7 fest an der unteren Deckschicht 3 ausgebildet, wobei die Schicht 5 aus Klebstoff bei Herstellung der Ausnehmung 6 nicht mechanisch abgetragen wurde.

Das Befestigungselement 9 weist eine untere Kontaktfläche 10 auf, die auf die Bodenfläche 7 positioniert wird. Das Befestigungselement 9 ist als zylinderförmiger Dübel ausgebildet, der einen oberen Randbereich 11 aufweist. Beim Einfügen des Befestigungselementes 9 legen sich die Rippen an eine ringförmige Öffnung 8 in der oberen Deckschicht 2 an.

Nach dem Einfügen des Befestigungselementes 9 wird nun die in Figur 5 gezeigte Position erreicht. Um das Befestigungselement 9 mit der unteren Kontaktfläche 10 mit der Deckschicht 3 zu verkleben, ist eine Einrichtung 13 zur Erzeugung eines elektromagnetischen Feldes vorgesehen, mittels dem der Klebstoff 5 bzw. 5' an der Deckschicht 3 erwärmt wird. Durch das Erwärmen verflüssigt sich der Klebstoff 5 bzw. 5' und kann beim anschließenden Abkühlen und Aushärten eine Verklebung zwischen dem Befestigungselement 9 und der Deckschicht 3 herstellen.

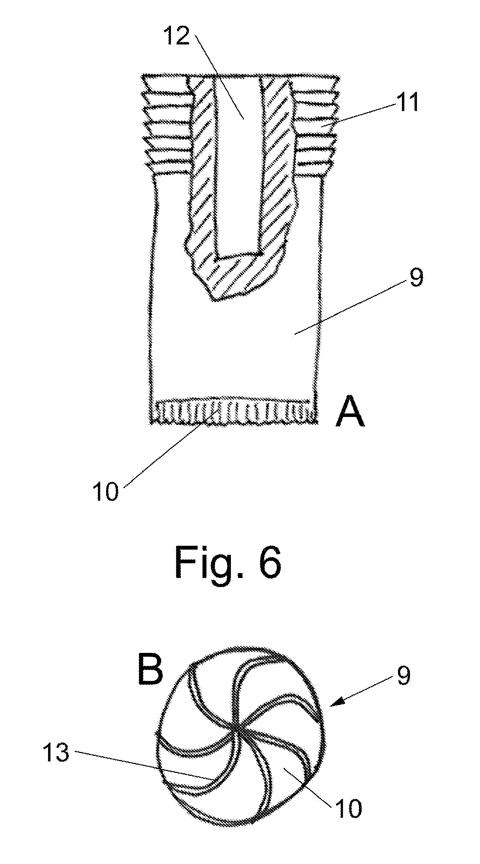

In den Figuren 6A und 6B ist eine mögliche Ausgestaltung des Befestigungselementes 9 dargestellt. Das Befestigungselement 9 ist als Kunststoffdübel mit einer unteren Kontaktfläche 10 ausgebildet, die eine Profilierung in Form von gewellten Lamellen bzw. Rippen 13 aufweist. Durch die Profilierung an der Kontaktfläche 10 ist es möglich, nach dem Einfügen des Befestigungselement 9 dieses zu drehen, um etwaige Verschmutzungen an der Bodenfläche 7 der Ausnehmung 6 radial nach außen zu schieben und somit das Fügeergebnis zwischen dem Befestigungselement 9 und der Deckschicht 3 zu verbessern.

Das Befestigungselement 9 weist eine Bohrung 12 bzw. Kanal zur Festlegung von Befestigungsmitteln, wie Schraubbolzen oder Klemmelemente auf.

Bei dem erfindungsgemäßem Verfahren zur Herstellung einer Leichtbauplatte können auch gleichzeitig in einem Arbeitsgang mehrere Befestigungselemente 9 mit der unteren und/oder oberen Deckschicht 2 bzw. 3 verklebt werden. Dabei ist es möglich, statt dem gezeigten Dübel aus Kunststoff auch andere Befestigungselemente entsprechend zu verkleben.

## Patentansprüche

1. Verfahren zur Herstellung einer Leichtbauplatte (1) mit mindestens einem Befestigungselement (9), mit den folgenden Schritten:
a) Benetzen einer oberen und einer unteren Deckschicht (2, 3) mit einem unter Wärmeeinwirkung verflüssigbaren Klebstoff (5, 5');
b) Verkleben einer Zwischenlage (4) mit der oberen und der unteren Deckschicht (2, 3);
c) Einbringen einer Ausnehmung (6) in der oberen Deckschicht (2) und der Zwischenlage (4);
d) Einsetzen eines Befestigungselementes (9) in die Ausnehmung (6) wobei eine untere Kontaktfläche (10) des Befestigungselementes (9) an der mit Klebstoff (5, 5') beschichteten unteren Deckschicht (3) anliegt;
e) Erwärmen des Klebstoffes (5, 5') im Bereich der unteren Kontaktfläche (10) des Befestigungselementes (9) und
f) Verkleben des Befestigungselementes (9) mit der unteren Deckschicht (3).

2. Verfahren nach Anspruch 1, **dadurch gekennzeichnet, dass** die Leichtbauplatte (1) vor dem Einbringen der Ausnehmung (6) geschnitten wird.

3. Verfahren nach Anspruch 1 oder 2, **dadurch gekennzeichnet, dass** das Erwärmen des Klebstoffes (5, 5') im Bereich der unteren Kontaktfläche (10) des Befestigungselementes (9) durch ein elektromagnetisches Feld erfolgt.

4. Verfahren nach einem der Ansprüche 1 bis 3, **dadurch gekennzeichnet, dass** das Befestigungselement (9) an der Unterseite profiliert ausgebildet ist und nach dem Einsetzen in die Ausnehmung (6) gedreht wird.

5. Verfahren nach einem der Ansprüche 1 bis 4, **dadurch gekennzeichnet, dass** der Klebstoff (5, 5') beim Benetzen der unteren und/oder der oberen Deckschicht (2, 3) mit einer Dicke von mehr als 0,1 mm aufgetragen wird.

6. Verfahren nach einem der Ansprüche 1 bis 5, **dadurch gekennzeichnet, dass** ein ringförmiger Kontaktbereich zwischen der oberen Deckschicht (2) und dem Befestigungselement (9) ebenfalls zum Verkleben des Befestigungselementes (9) mit der oberen Deckschicht (2) erwärmt wird.

7. Verfahren nach einem der Ansprüche 1 bis 6, **dadurch gekennzeichnet, dass** mehrere Befestigungselemente (9) in einem Arbeitsgang mit der unteren Deckschicht (3) verklebt werden.

8. Leichtbauplatte (1), insbesondere nach einem Verfahren gemäß einem der vorhergehenden Ansprüche hergestellt, mit einer oberen und einer unteren Deckschicht (2, 3) die mit einer Zwischenlage (4) verklebt sind, wobei mindestens ein Befestigungselement (9) in eine Ausnehmung (6) in der oberen Deckschicht (2) und der Zwischenlage (4) eingesetzt ist, **dadurch gekennzeichnet, dass** das mindestens eine Befestigungselement (9) mittels der Klebstoffschicht (5, 5') mit der unteren Deckschicht (3) verklebt ist, mit der auch die Zwischenlage (4) verklebt ist.

9. Leichtbauplatte nach Anspruch 8, **dadurch gekennzeichnet, dass** der Klebstoff (5, 5') durch ein elektromagnetisches Feld erwärmbar und verflüssigbar ist.

10. Leichtbauplatte nach Anspruch 8 oder 9, **dadurch gekennzeichnet, dass** der Klebstoff (5, 5') mit einer Schichtdicke von mehr als 0,1 mm beschichtet ist.

11. Leichtbauplatte nach Anspruch 10, **dadurch gekennzeichnet, dass** der Klebstoff (5, 5') als Folie verflüssigbar ist.

12. Leichtbauplatte nach Anspruch 10, **dadurch gekennzeichnet, dass** der Klebstoff (5, 5') als Granulat oder als Pulver verflüssigbar ist.

13. Leichtbauplatte nach einem der Ansprüche 8 bis 12, **dadurch gekennzeichnet, dass** das Befestigungselement (9) als Kunststoffdübel ausgebildet ist.

14. Leichtbauplatte nach einem der Ansprüche 8 bis 13, **dadurch gekennzeichnet, dass** die Zwischenlage (4) als Wabenplatte ausgebildet ist.
